(19) Europäisches Patentamt
European Patent Office
Office européen des brevets

(11) **EP 2 289 144 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(21) Anmeldenummer: **08773847.2**

(22) Anmeldetag: **26.06.2008**

(51) Int Cl.:
*H02H 1/04* (2006.01)  *H02J 3/24* (2006.01)
*H02H 3/40* (2006.01)

(86) Internationale Anmeldenummer:
**PCT/EP2008/005440**

(87) Internationale Veröffentlichungsnummer:
**WO 2009/155953 (30.12.2009 Gazette 2009/53)**

(54) **VERFAHREN ZUM ERZEUGEN EINES PENDELSIGNALS UND ELEKTRISCHES SCHUTZ- ODER MESSGERÄT MIT EINER PENDELERKENNUNGSEINRICHTUNG**

METHOD FOR PRODUCTION OF AN OSCILLATING SIGNAL AND ELECTRICAL PROTECTION - OR MEASUREMENT INSTRUMENT HAVING AN OSCILLATION IDENTIFICATION DEVICE

PROCÉDÉ DE PRODUCTION D'UN SIGNAL PENDULAIRE ET APPAREIL ÉLECTRIQUE DE PROTECTION OU DE MESURE AVEC UN DISPOSITIF DE DÉTECTION DES OSCILLATIONS PENDULAIRES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**02.03.2011 Patentblatt 2011/09**

(73) Patentinhaber: **Siemens Aktiengesellschaft**
**80333 München (DE)**

(72) Erfinder: **YELGIN, Yilmaz**
**13589 Berlin (DE)**

(56) Entgegenhaltungen:
EP-A- 0 724 319    EP-A- 0 724 320
EP-A- 0 783 197    DE-A1- 4 100 646
US-A1- 2006 067 095

• MECHRAOUI A ET AL: "A NEW BLOCKING PRINCIPLE WITH PHASE AND EARTH FAULT DETECTION DURING FAST POWER SWINGS FOR DISTANCE PROTECTION" IEEE TRANSACTIONS ON POWER DELIVERY, IEEE SERVICE CENTER, NEW YORK, NY, US, Bd. 10, Nr. 3, 1. Juli 1995 (1995-07-01), Seiten 1242-1248, XP000557311 ISSN: 0885-8977

**Beschreibung**

Die Erfindung betrifft ein Verfahren zum Erzeugen eines eine Pendelung in einem elektrischen Energieversorgungsnetz anzeigenden Pendelsignals, bei dem Strom und Spannung an einer Messstelle des elektrischen Energieversorgungsnetzes charakterisierende Messwerte erfasst und in digitale Strom- und Spannungszeigermesswerte umgesetzt werden und aus den Stromzeigermesswerten und den Spannungszeigermesswerten in der komplexen Zahlenebene liegende Impedanzwerte berechnet werden. Es wird ein durch die Impedanzwerte gebildeter Kurvenverlauf betrachtet und unter Heranziehung charakteristischer Eigenschaften des Kurvenverlaufs wird das Pendelsignal erzeugt. Die Erfindung betrifft auch ein elektrisches Schutz-oder Messgerät mit einer Pendelerkennungseinrichtung.

Elektrische Energieversorgungsnetze werden üblicherweise abschnittsweise mit sogenannten Schutzgeräten auf unzulässige Betriebszustände, wie beispielsweise Kurzschlüsse oder Erdschlüsse, überwacht. Beim Auftreten eines solchen unzulässigen Betriebszustand trennen diese Schutzgeräte den von dem Fehler betroffenen Teil des Energieversorgungsnetzes vom restlichen Netz durch Öffnen entsprechender Leistungsschalter ab und vermeiden so eine Gefährdung für Personen und Komponenten des elektrischen Energieversorgungsnetzes. Zur Überwachung der einzelnen Abschnitte des elektrischen Energieversorgungsnetzes führen die Schutzgeräte sogenannte Schutzalgorithmen aus. Hierbei wird unter Verwendung von Messwerten, bei denen es sich beispielsweise um den Strom und die Spannung an einer Messstelle des elektrischen Energieversorgungsnetzes charakterisierende Messwerte handeln kann, eine Entscheidung darüber getroffen, ob ein unzulässiger oder ein zulässiger Betriebszustand vorliegt.

Ein häufig in diesem Zusammenhang eingesetzter Schutzalgorithmus arbeitet nach dem sogenannten Distanzschutzverfahren, bei dem aus Strom- und Spannungsmesswerten in einer komplexen Zahlenebene liegende Impedanzwerte berechnet werden und überprüft wird, ob die Impedanzwerte innerhalb eines - auch als Auslösepolygon bezeichneten - vorgegebenen Bereiches liegen. Sofern die Impedanzwerte innerhalb dieses vorgegebenen Bereiches liegen, stellt das Distanzschutzgerät einen unzulässigen Betriebszustand an dem von ihm überwachten Abschnitt des elektrischen Energieversorgungsnetzes fest und sendet ein Auslösesignal an einen oder mehrere den Abschnitt begrenzende Leistungsschalter, um den fehlerhaften Abschnitt vom restlichen Energieversorgungsnetz zu trennen.

Bei plötzlichen Laständerungen oder Veränderungen an der Struktur des elektrischen Energieversorgungsnetzes (beispielsweise durch Zu- oder Abschalten größerer Netzteile) kann es im elektrischen Energieversorgungsnetz zu sogenannten Pendelvorgängen bzw. Netzpendelungen, die im Folgenden der Einfachheit halber als "Pendelungen" bezeichnet werden sollen, kommen, da sich die Generatoren an den Einspeisestellen des elektrischen Energieversorgungsnetzes auf die neue Lastsituation einstellen müssen. Dies geschieht üblicherweise in Form einer gedämpften Schwingung, bis sich der neue Arbeitspunkt des elektrischen Energieversorgungsnetzes stabilisiert hat. Während einer Pendelung pendeln Strom und Spannung sozusagen entlang der Energieversorgungsleitungen zwischen hohen und niedrigen Werten. Daher kann es bei einer Pendelung häufig vorkommen, dass ein elektrisches Distanzschutzgerät an seiner Messstelle niedrige Spannungen bei gleichzeitig hohen Strömen misst und daraus geringe Impedanzwerte berechnet, die innerhalb eines Auslösepolygons liegen. Da eine gedämpfte - auch als synchron bezeichnete - Pendelung üblicherweise jedoch keinen gefährlichen Betriebszustand des elektrischen Energieversorgungsnetzes beschreibt, soll in einem solchen Fall keine Auslösung erfolgen. Bei bloßer Anwendung der Distanzschutzfunktion würde das Distanzschutzgerät jedoch einen unzulässigen Betriebszustand erkennen, und den überwachten Abschnitt des elektrischen Energieversorgungsnetzes abschalten. Hierdurch können ungewollte Fehlabschaltungen bestimmter Teile des elektrischen Energieversorgungsnetzes stattfinden, die üblicherweise für den Betreiber des elektrischen Energieversorgungsnetzes mit hohen Kosten verbunden sind. Außerdem kann durch die sich durch die Fehlabschaltung sprunghaft verändernde Netzstruktur eine Überlastung noch eingeschalteter Abschnitte des elektrischen Energieversorgungsnetzes erfolgen, was zu kaskadierenden Abschaltungen bis hin zu einem sogenannten Blackout führen kann.

Der Vollständigkeit halber soll an dieser Stelle erwähnt werden, dass die später beschriebene Erfindung neben der Erkennung von synchronen Pendelungen auch zur Erkennung sogenannter asynchroner Pendelungen eingesetzt werden kann, bei denen die Pendelung die volle Impedanzbahnkurve durchläuft. Der Begriff "Pendelungen" soll daher im Folgenden in diesem Sinne (synchron oder asynchron) verstanden werden.

Um bei Pendelungen ungewollte Fehlauslösungen zu vermeiden, werden üblicherweise sogenannte Pendelerkennungseinrichtungen vorgesehen. Wenn eine Pendelerkennungseinrichtung eine Pendelung erkennt, gibt sie ein Pendelsignal ab. Dieses Pendelsignal kann beispielsweise dazu verwendet werden, die Abgabe eines Auslösesignals an einen elektrischen Leistungsschalter durch ein Distanzschutzgerät zu blockieren. Eine Pendelerkennungseinrichtung kann hierbei entweder integrierter Bestandteil eines Distanzschutzgerätes sein oder eine separate Einrichtung bilden, das mit einem Distanzschutzgerät in Wirkverbindung steht.

Distanzschutzgeräte mit integrierter Pendelerkennung werden von der Anmelderin beispielsweise unter dem Namen "SIPROTEC Distanzschutz 7SA6" angeboten. Die entsprechenden Geräte sind aus dem Gerätehandbuch der Siemens AG "SIPROTEC Distanzschutz

7SA6, V.4.3" aus dem Jahr 2002, Bestellnummer der Siemens AG C53000-G1100-C156-3, bekannt. Im Abschnitt 2.3 "Maßnahmen bei Netzpendelungen" ist in diesem Gerätehandbuch beschrieben, dass zur Pendelerkennung ein von Impedanzwerten in einer komplexen Zahlenebene gebildeter Kurvenverlauf auf charakteristische Eigenschaften wie z.B. "Kontinuität", "Monotonie" und "sprunghaftes Verhalten" untersucht wird und anhand der Untersuchungsergebnisse im Falle einer erkannten Pendelung ein Pendelsignal erzeugt wird.

Aus der EP 0 724 319 A2 ist beispielsweise ein Verfahren zum Gewinnen eines eine Pendelung anzeigenden Signals bekannt, bei dem ein Verlauf von Impedanzwerten innerhalb eines Pendel- und eines Auslösepolygons auf sprunghaftes Verhalten untersucht wird. Zudem offenbart die EP 0 783 197 A1 ein Verfahren zur Erkennung einer Pendelung, bei dem der Eintritt eines Verlaufes von Impedanzwerten in zusätzliche Zonen in einer Impedanzebene betrachtet wird, um sprunghafte Änderungen erkennen zu können.

Der Erfindung liegt die Aufgabe zugrunde, eine alternativ oder zusätzlich zu dem bekannten Verfahren einsetzbare Möglichkeit zur zuverlässigen Erkennung einer Pendelung in einem Energieversorgungsnetz anzugeben.

Diese Aufgabe wird erfindungsgemäß durch ein Verfahren der eingangs genannten Art gelöst, bei dem ein erstes Pendelverdachtssignal erzeugt wird, wenn der Abstand der Impedanzwerte von einem Pendelungs-Mittelpunkt im Wesentlichen gleich bleibt und ein zweites Pendelverdachtssignal erzeugt wird, wenn die Geschwindigkeit, mit der die Impedanzwerte auf dem Kurvenverlauf voranschreiten, im wesentlichen gleich bleibt. Das Pendelsignal wird dann erzeugt, wenn sowohl das erste als auch das zweite Pendelverdachtssignal vorliegen. Das erfindungsgemäße Verfahren geht von der Erkenntnis aus, dass bei Pendelungen ein von den Impedanzwerten beschriebener Kurvenverlauf im Wesentlichen einem elliptischen Verlauf folgt und einen stetigen, aber nicht plötzlichen Bewegungsablauf aufweist. Auf die beschriebene Weise kann daher sehr sicher eine Pendelung in einem elektrischen Energieversorgungsnetz erkannt werden. Ein Pendelsignal kann beispielsweise von einem in einem Schutzgerät durchgeführten Algorithmus zur Entscheidung über zulässige oder unzulässige Betriebszustände herangezogen werden und/oder in Form einer Meldung einer Netzleitstelle zur Verfügung gestellt werden.

Gemäß einer vorteilhaften Weiterbildung des erfindungsgemäßen Verfahrens ist vorgesehen, dass zur Erzeugung des ersten Pendelverdachtssignals für die auf dem Kurvenverlauf liegenden Impedanzwerte jeweils ein von dem Pendelungs-Mittelpunkt ausgehender Impedanzzeiger bestimmt und der Betrag des jeweiligen Impedanzzeigers berechnet wird. Das erste Pendelverdachtssignal wird erzeugt, wenn das Verhältnis der Beträge zweier unmittelbar aufeinanderfolgender Impedanzzeiger innerhalb eines vorgegebenen Bereiches um den Wert 1 liegt. Auf diese Weise kann die Erzeugung des ersten Pendelverdachtsignals mit vergleichsweise einfachen rechnerischen Mitteln durchgeführt werden.

Eine weitere vorteilhafte Ausführungsform des erfindungsgemäßen Verfahrens sieht vor, dass zur Erzeugung des zweiten Pendelverdachtssignals für die auf dem Kurvenverlauf liegenden Impedanzwerte jeweils ein von dem Pendelungs-Mittelpunkt ausgehender Impedanzzeiger bestimmt und für den aktuellen Impedanzzeiger und den diesem unmittelbar vorausgehenden Impedanzzeiger jeweils eine Winkelgeschwindigkeit bestimmt wird. Das zweite Pendelverdachtssignal wird dann erzeugt, wenn die Differenz der Winkelgeschwindigkeiten einen vorgegebenen Geschwindigkeits-Schwellenwert unterschreitet. Hierdurch kann mit vergleichsweise einfachen rechnerischen Mitteln das zweite Pendelverdachtsignal erzeugt werden.

In diesem Zusammenhang wird es ferner als vorteilhaft angesehen, wenn zur Bestimmung der Winkelgeschwindigkeit jeweils der Winkel zwischen dem betrachteten Impedanzzeiger und dem diesem unmittelbar vorangehenden Impedanzzeiger betrachtet wird. Die Winkelgeschwindigkeit kann nämlich bei durch gleichmäßige Abtastung von Strom und Spannung erzeugten Strom- und Spannungszeigermesswerten als proportional zum zwischen zwei Impedanzzeigern überstrichenen Winkel angesehen werden, so dass eine einfache Winkelbestimmung zur Berechnung der Winkelgeschwindigkeit ausreicht.

Eine weitere vorteilhafte Ausführungsform des erfindungsgemäßen Verfahrens sieht vor, dass ein drittes Pendelverdachtssignal erzeugt wird, wenn die Beschleunigung, mit der die Impedanzwerte auf dem Kurvenverlauf voranschreiten, im Wesentlichen gleich bleibt. Das Pendelsignal auch dann erzeugt, wenn das erste und das dritte Pendelverdachtssignal vorliegen. Auf diese Weise kann das erfindungsgemäße Verfahren zur Pendelerkennung noch zuverlässiger durchgeführt werden, da es in Einzelfällen von ungefährlichen Pendelungen vorkommen kann, dass sich die Winkelgeschwindigkeit einer Pendelung zwar ändert, dies allerdings in gleichmäßiger Weise stattfindet. In einem solchen Fall liegt damit das zweite Pendelverdachtsignal nicht vor. Da aber diese Veränderung in gleichmäßiger Weise vorliegt und somit die Winkelbeschleunigung weitgehend konstant ist, liegt das dritte Pendelverdachtssignal vor und das Pendelsignal wird bei anstehendem ersten und dritten Pendelverdachtssignal erzeugt.

In diesem Zusammenhang kann zum Verringern der zur Bestimmung des dritten Pendelverdachtsignals benötigten Rechenleistung vorteilhafterweise vorgesehen sein, dass das dritte Pendelverdachtssignal nur dann erzeugt wird, wenn lediglich das erste Pendelverdachtssignal vorliegt. In diesem Fall wird das Kriterium für dritte Pendelverdachtssignal nämlich nur bei Bedarf, also bei fehlendem zweiten Pendelverdachtssignal, überprüft.

In diesem Zusammenhang sieht ferner eine vorteilhafte Ausführungsform des erfindungsgemäßen Verfahrens vor, dass zur Erzeugung des dritten Pendelverdachtssignals für die auf dem Kurvenverlauf liegenden Impedanzwerte jeweils ein von dem Pendelungs-Mittelpunkt ausgehender Impedanzzeiger bestimmt wird und für den aktuellen Impedanzzeiger und den diesem unmittelbar vorausgehenden Impedanzzeiger jeweils eine Winkelbeschleunigung bestimmt wird. Das dritte Pendelverdachtssignal wird dann erzeugt, wenn die Differenz der Winkelbeschleunigungen einen vorgegebenen Beschleunigungs-Schwellenwert unterschreitet. Bei einer gleichmäßigen Abtastung von Strom und Spannung reicht es wiederum aus, für die Bestimmung der Winkelbeschleunigung lediglich die jeweils überstrichenen Winkel zu betrachten.

Hinsichtlich der Bestimmung des Pendelungs-Mittelpunktes sieht eine vorteilhafte Weiterbildung des erfindungsgemäßen Verfahrens vor, dass zur Bestimmung des Pendelungs-Mittelpunktes für den aktuellen Impedanzwert und einer Anzahl von diesem unmittelbar vorangehenden Impedanzwerten jeweils Teil-Mittelpunkte bestimmt werden und diejenigen Teil-Mittelpunkte mit dem größten und dem kleinsten Imaginärteil entfernt werden. Aus den verbleibenden Teil-Mittelpunkten wird der Pendelungs-Mittelwert als arithmetisches Mittel bestimmt. Auf diese Weise können auch leichte Abweichungen des von den Impedanzwerten gebildeten Kurvenverlaufes von einem idealen elliptischen Verlauf, kompensiert werden, da die durch die Abweichung entstehenden zu großen bzw. zu kleinen Imaginärteile der Teil-Mittelpunkte aus der weiteren Betrachtung herausfallen. Hinsichtlich des Realteils der Teil-Mittelpunkte und des Pendelungs-Mittelpunktes in guter Näherung ein Wert von Null angenommen werden; der Pendelungs-Mittelpunkt liegt damit also auf der imaginären Achse in der Impedanzebene.

Um in diesem Zusammenhang die Mittelpunkt-Berechnung noch genauer und zuverlässiger durchführen zu können, wird gemäß einer weiteren vorteilhaften Ausführungsform des erfindungsgemäßen Verfahrens vorgeschlagen, dass aus den verbleibenden Teil-Mittelpunkten nur dann der Pendelungs-Mittelpunkt bestimmt wird, wenn die Standardabweichung der Verteilung der Teil-Mittelpunkte unterhalb eines vorgegebenen Plausibilitäts-Schwellenwertes liegt.

Im Zusammenhang mit der Mittelpunkt-Berechnung wird ferner als vorteilhafte Ausführungsform des erfindungsgemäßen Verfahrens angesehen, wenn die Bestimmung der Teil-Mittelpunkte mittels eines Least-Square-Schätzverfahrens durchgeführt wird. Eine solche Mittelpunkt-Bestimmung ist beispielsweise in der deutschen Patentschrift DE 19746719 C1 der Siemens AG beschrieben.

Gemäß einer weiteren vorteilhaften Ausführungsform des erfindungsgemäßen Verfahrens wird vorgeschlagen, dass ein viertes Pendelverdachtssignal erzeugt wird, wenn der Kurvenverlauf ein monotones Verhalten aufweist und das Pendelsignal nur dann erzeugt wird, wenn auch das vierte Pendelverdachtssignal vorliegt. Um die Zuverlässigkeit der Erzeugung des Pendelsignals noch weiter zu steigern, kann ferner vorgesehen sein, dass ein fünftes Pendelverdachtssignal erzeugt wird, wenn der Abstand zwischen jeweils zwei unmittelbar aufeinanderfolgenden Impedanzwerten einen vorgegebenen Abstands-Schwellenwert übersteigt und das Pendelsignal nur dann erzeugt wird, wenn auch das fünfte Pendel-Verdachtssignal vorliegt. Durch die letzten beiden Maßnahmen - gemeinsam oder für sich genommen - kann das Pendelsignal mit noch größerer Zuverlässigkeit erzeugt werden, da die an sich bekannten Kriterien "Monotonie" und kontinuität" zusätzlich mit den im vorigen beschriebenen Kriterien verknüpft werden.

Um auch bei auftretenden Sprüngen bezüglich Real- oder Imaginärteil der Impedanzwerte mit großer Zuverlässigkeit eine Pendelung von einem unzulässigen Betriebszustand unterscheiden zu können, wird gemäß einer weiteren vorteilhaften Ausführungsform des erfindungsgemäßen Verfahrens vorgeschlagen, dass ein erstes Sprungsignal erzeugt wird, wenn eine sprunghafte Änderung zwischen zwei unmittelbar aufeinanderfolgenden Impedanzwerten hinsichtlich ihrer Imaginärteile erkannt wird und ein zweites Sprungsignal erzeugt wird, wenn eine sprunghafte Änderung zwischen zwei unmittelbar aufeinanderfolgenden Impedanzwerten hinsichtlich ihrer Realteile erkannt wird. Das Pendelsignal wird erzeugt, wenn nur eines der beiden Sprungsignale vorliegt und gleichzeitig das erste und zweite oder das erste und dritte Pendelverdachtssignal vorliegen. Das Pendelsignal wird hingegen nicht erzeugt, wenn beide Sprungsignale vorliegen.

Eine weitere vorteilhafte Ausführungsform des erfindungsgemäßen Verfahrens sieht vor, dass unter Verwendung der Impedanzwerte auch ein Distanzschutzverfahren durchgeführt wird; und die Erzeugung eines Auslösesignals durch das Distanzschutzverfahren blockiert wird, wenn das Pendelsignal ansteht.

Gemäß einer vorteilhaften Ausführungsform ist in diesem Zusammenhang vorgesehen, dass bei der Durchführung des Distanzschutzverfahrens die Impedanzwerte daraufhin überprüft werden, ob sie innerhalb eines vorgegebenen Auslösepolygons liegen, und das Pendelsignal nur dann erzeugt wird, wenn zumindest der aktuelle Impedanzwert innerhalb eines das Auslösepolygon umgebenden Pendelpolygons liegt. Da das Pendelsignal in diesem Fall nur erzeugt wird, wenn sich zumindest ein Impedanzwert innerhalb des Pendelpolygons, also in der Nähe des Auslösepolygons, befindet, kann erreicht werden, dass für den Betreiber eines Schutzgerätes mit einer solchen Pendelerkennungsfunktion verwirrende Meldungen über anstehende Pendelsignale vermieden werden, wenn diese Pendelung in einem auch als "Lastschwankung" bezeichneten Betriebszustand des elektrischen Energieversorgungsnetzes stattfindet, der weit genug von einem unzulässigen Betriebszustand entfernt ist.

Die oben genannte Aufgabe wird schließlich auch durch ein elektrisches Schutz- oder Messgerät mit einer Pendelerkennungseinrichtung gelöst, die zur Durchführung eines der oben beschriebenen Verfahren eingerichtet ist. Hierbei kann die Pendelerkennungseinrichtung sowohl in ein elektrisches Distanzschutzgerät integriert als auch in Form eines Messgerätes als separate Einheit ausgeführt sein.

Die Erfindung soll im Folgenden anhand von Ausführungsbeispielen näher erläutert werden. Hierzu zeigen

Figur 1 eine schematische Darstellung eines an einer Messstelle eines elektrischen Energieversorgungsnetzes angeordneten Distanzschutzgerätes mit integrierter Pendelerkennungseinrichtung;

Figur 2 eine Abfolge komplexer Impedanzwerte im R-X-Diagramm;

Figur 3 ein R-X-Diagramm zur Erläuterung der Erzeugung eines ersten und eines zweiten Pendelverdachtsignals;

Figur 4 ein weiteres R-X-Diagramm zur Erläuterung der Bestimmung eines Pendelungs-Mittelpunktes;

Figur 5 ein Blockschaltbild zur Erläuterung eines ersten Ausführungsbeispiels einer Pendelerkennungseinrichtung;

Figur 6 ein weiteres Blockschildbild zur Erläuterung eines zweiten Ausführungsbeispiels einer Pendelerkennungseinrichtung;

Figur 7 ein R-X-Diagramm zur Erläuterung der Bildung eines dritten Pendelverdachtsignals;

Figur 8 ein weiteres Blockschaltbild zur Erläuterung eines dritten Ausführungsbeispiels einer Pendelerkennungseinrichtung;

Figur 9 ein weiteres Blockschaltbild zur Erläuterung eines vierten Ausführungsbeispiels einer Pendelerkennungseinrichtung;

Figur 10 ein weiteres Blockschaltbild zur Erläuterung eines fünften Ausführungsbeispiels einer Pendelerkennungseinrichtung; und

Figur 11 ein R-X-Diagramm mit eingezeichneten Auslöse- und Pendelpolygon.

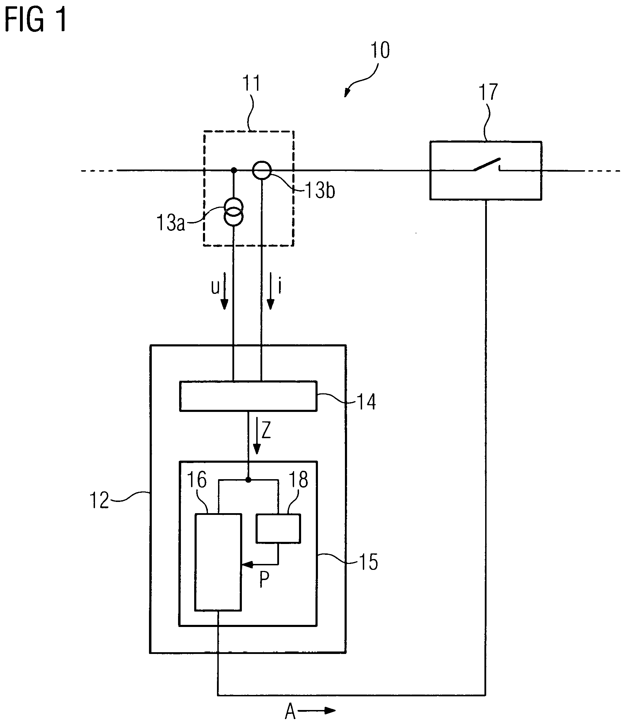

Figur 1 zeigt in schematischer Darstellung einen Abschnitt 10 eines ansonsten nicht näher dargestellten elektrischen Energieversorgungsnetzes. Bei dem Abschnitt 10 kann es sich beispielsweise um eine dreiphasige Energieversorgungsleitung eines Wechselstromnetzes handeln. Zum Überwachen des Abschnittes 10 auf unzulässige Betriebszustände, wie beispielsweise Kurzschlüsse oder Erdschlüsse, ist an einer Messstelle 11 ein elektrisches Distanzschutzgerät 12 vorgesehen. An der Messstelle 11 werden über lediglich schematisch angedeutete Spannungswandler 13a und Stromwandler 13b Spannung und Strom an der Messstelle 11 charakterisierende Messwerte u bzw. i erfasst und an das Distanzschutzgerät 12 übertragen. Das Distanzschutzgerät 12 weist eine Messwerterfassungs- und Vorverarbeitungseinrichtung 14 auf, mit der die Messwerte u und i erfasst werden und zunächst auf ein zur geräteinternen Weiterverarbeitung geeignetes Spannungs- bzw. Stromniveau transformiert werden.

Anschließend findet eine Analog-Digitalumsetzung der Messwerte u und i statt. Anhand der digitalisierten Messwerte werden - beispielsweise unter Zuhilfenahme digitaler Filter - Spannungszeigermesswerte und Stromzeigermesswerte erzeugt. Diese Spannungs- bzw. Stromzeigermesswerte umfassen eine Information über Amplitude und Phasenwinkel der gemessenen Spannung bzw. des gemessenen Stromes zum jeweiligen Messzeitpunkt und werden üblicherweise als Zeiger in der komplexen Zahlenebene, in diesem Fall auch als auch Impedanzebene bezeichnet, dargestellt. In der Messwerterfassungs- und Vorverarbeitungseinrichtung 14 findet ferner eine Berechnung von Impedanzwerten Z aus den Strom- und Spannungszeigermesswerten statt, wobei auch die berechneten Impedanzwerte Z in der komplexen Zahlenebene, auch als Impedanzebene bezeichnet, liegen.

Die Transformation auf ein für das elektrische Distanzschutzgerät 12 geeignetes Strom- und Spannungsniveau sowie eine Analog-Digital-Umsetzung kann im Unterschied zur Darstellung gemäß Figur 1 auch außerhalb des elektrischen Distanzschutzgerätes 12 stattfinden. In diesem Fall würde die Messwerterfassungs- und Vorverarbeitungseinrichtung 14 lediglich die Strom- und Spannungszeigerberechnung sowie die Bestimmung der zugehörigen Impedanzwerte Z vornehmen.

Die Impedanzwerte Z werden an eine Steuereinrichtung 15 des Distanzschutzgerätes 12 übermittelt. Die Steuereinrichtung 15 weist eine Distanzschutzeinrichtung 16 auf, in der aus den Impedanzwerten Z unter Verwendung eines sogenannten Distanzschutzalgorithmus eine Entscheidung darüber getroffen wird, ob auf dem Abschnitt 10 des elektrischen Energieversorgungsnetzes ein zulässiger oder ein unzulässiger Betriebszustand vorliegt.

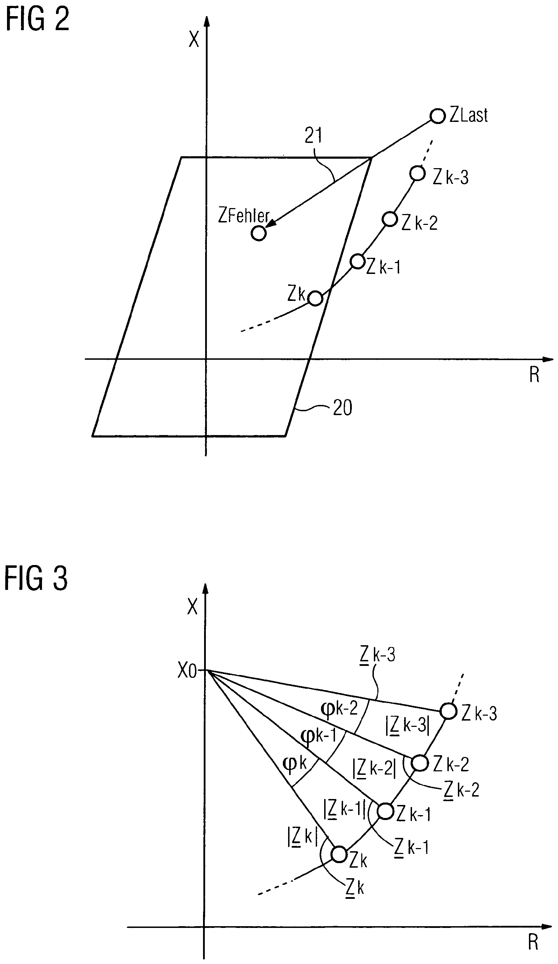

Zur Erläuterung dieses Vorgangs wird zusätzlich Figur 2 hinzugezogen. Figur 2 zeigt in einem sogenannten R-X-Diagramm, also in der komplexen Impedanzebene, aufgetragene Impedanzwerte $Z_{Last}$, $Z_{Fehler}$, $Z_k$, $Z_{k-1}$, $Z_{k-2}$ und $Z_{k-3}$. Diese Impedanzwerte sind gemäß der komplexen Darstellungsform

$$Z = R + jX$$

dargestellt, wobei der Realteil R den sogenannten Resistanzanteil (den ohmschen Widerstandsanteil) und der Imaginärteil X den sogenannten Reaktanzanteil (den durch Kapazitäten und Induktivitäten hervorgerufenen Widerstandsanteil) der Impedanz angibt, während j die imaginäre Zahlt $\sqrt{-1}$ bezeichnet.

Der von der Distanzschutzeinrichtung 16 ausgeführte Distanzschutzalgorithmus überprüft die Impedanzwerte Z daraufhin, ob sie innerhalb eines durch ein sogenanntes Auslösepolygon 20 beschriebenen Bereiches im R-X-Diagramm liegen. Üblicherweise ist dieses Auslösepolygon 20 bei Impedanzen niedriger Real-und Imaginärteile angesiedelt. In normalen Lastsituationen liegt nämlich der Arbeitspunkt der Impedanz $Z_{Last}$ relativ konstant bei Impedanzwerten mit vergleichsweise hohen Real- und Imaginärteilen, während beim Eintreten eines Fehlers, wie beispielsweise eines Kurzschlusses, aufgrund des an der Fehlerstelle fließenden hohen Fehlerstromes ein durch einen Pfeil 21 angedeuteter sprunghafter Wechsel zu niedrigen Impedanzwerten - dargestellt durch den Impedanzwert $Z_{Fehler}$ - stattfindet. Erkennt die Distanzschutzeinrichtung 16 (vgl. Figur 1) einen unzulässigen Betriebszustand daran, dass die berechneten Impedanzwerte innerhalb des Auslösepolygons 20 liegen, so gibt sie an einem Ausgang des elektrischen Distanzschutzgerätes 12 ein Auslösesignal A ab, das an einen Leistungsschalter 17 übertragen wird, der daraufhin zum Öffnen seiner Schaltkontakte veranlasst wird und den Abschnitt 10 vom restlichen Energieversorgungsnetz abtrennt.

Bei einer stattfindenden Pendelung pendeln Strom und Spannung und damit die elektrische Leistung sozusagen entlang einer Energieübertragungsleitung zwischen mehreren Generatoren und elektrischen Lasten hin und her bis sich - im Falle einer gedämpften Pendelung - schließlich wieder ein stabiler Arbeitspunkt einstellt. Durch solche elektrischen Pendelungen können an einer Messstelle des elektrischen Energieversorgungsnetzes Impedanzwerte bestimmt werden, die innerhalb des Auslösepolygons 20 liegen, allerdings nicht auf einen unzulässigen Betriebszustand, sondern auf die Pendelung hinweisen. Im Gegensatz zum Fehlerfall bewegen sich die Impedanzwerte $Z_{k-3}$, $Z_{k-2}$, $Z_{k-1}$ und $Z_k$ im Falle einer Pendelung langsam vom Arbeitspunkt $Z_{Last}$ entlang eines annähernd elliptischen Kurvenverlaufs auf das Auslösepolygon 20 zu und treten schließlich mit dem Impedanzwert $Z_K$ in dieses ein. In einem solchen Fall soll trotz im Auslösepolygon 20 liegender Impedanzwerte das Distanzschutzgerät den zugehörigen Leistungsschalter nicht öffnen. Um ungewollte Fehlauslösungen zu vermeiden, müssen daher Pendelvorgänge sicher erkannt werden, um ggf. eine Auslösung der betreffenden Leistungsschalter verhindern zu können. Algorithmen zur Pendelerkennung müssen daher darauf ausgelegt sein, den Unterschied zwischen einer plötzlich eintretenden Fehlersituation und einer allmählichen Pendelung zu erkennen, um im Falle einer Pendelung die Abgabe eines Auslösesignals an einen Leistungsschalter zu unterdrücken.

Die Steuereinrichtung 15 des Distanzschutzgerätes 12 (vgl. Figur 1) weist daher eine Pendelerkennungseinrichtung 18 auf, die anhand der Impedanzwerte überprüft, ob eine Pendelung auf dem Abschnitt 10 des elektrischen Energieversorgungsnetzes vorliegt, und im Falle einer solchen Pendelung ein Pendelsignal P an die Distanzschutzeinrichtung 16 abgibt, um dort die Abgabe des Auslösesignals A zu blockieren. Mit anderen Worten, soll bei erkannter Pendelung kein Auslösesignal A abgegeben werden, da es sich in einem solchen Fall nicht um einen unzulässigen Betriebszustand auf dem Abschnitt 10 des elektrischen Energieversorgungsnetzes handelt.

Die Pendelerkennungseinrichtung 18 kann im Gegensatz zur Darstellung gemäß Figur 1 auch als externe Pendelerkennungseinrichtung, das heißt außerhalb des elektrischen Distanzschutzgerätes 12, angeordnet sein und ein entsprechendes Pendelsignal P an einen Eingang eines entsprechenden Distanzschutzgerätes abgeben, um eine Steuereinrichtung des Distanzschutzgerätes auf eine erkannte Pendelung hinzuweisen.

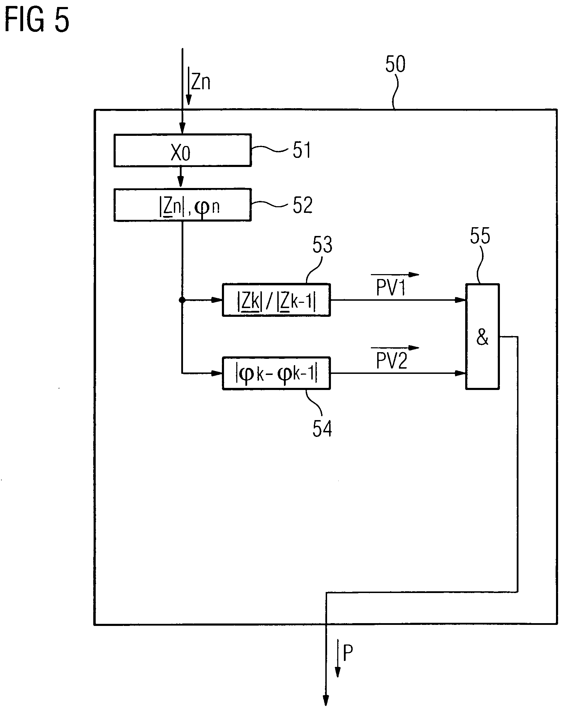

Ausführungsbeispiele, die als Pendelerkennungseinrichtung 18 gemäß Figur 1 oder externe Pendelerkennungseinrichtungen verwendet werden können, werden an späterer Stelle im Zusammenhang mit den Figuren 5, 6 und 8 bis 10 behandelt.

Die Funktionsweise der Erkennung einer elektrischen Pendelung soll anhand von Figur 3 näher dargestellt werden. Figur 3 zeigt einen Folge von Impedanzwerten $Z_k$, $Z_{k-1}$, $Z_{k-2}$ und $Z_{k-3}$ im komplexen R-X-Diagramm. Die Impedanzwerte $Z_k$ bis $Z_{k-3}$ stellen lediglich eine Auswahl der anhand der aufgenommenen Strom- und Spannungsmesswerte i bzw. u berechneten Impedanzwerte dar. $Z_k$ steht hierbei für den aktuell aufgenommenen Impedanzwert, der Impedanzwert $Z_{k-1}$ ist derjenige Impedanzwert, der genau einen Abtasttakt vorher bestimmt worden ist, also der dem aktuellen Impedanzwert $Z_k$ unmittelbar vorangehende Impedanzwert. In entsprechender Weise bilden $Z_{k-2}$ und $Z_{k-3}$ die dem Impedanzwert $Z_{k-1}$ jeweils vorangehenden Impedanzwerte. Der von den Impedanzwerten $Z_k$ bis $Z_{k-3}$ beschriebene Kurvenverlauf weist - wie bereits zu Figur 2 dargestellt - auf eine Pendelung hin. Zur sicheren Erkennung der Pendelung wird zunächst ein sogenannter Pendelungs-Mittelpunkt $X_0$ gebildet, der auf der imaginären Achse des R-X-Diagramms liegt und für den annähernd elliptischen Kurvenverlauf, den die Impedanzwerte $Z_k$ bis $Z_{k-3}$ beschreiben, einen Zentrumspunkt bildet. Stimmt der Abstand aufeinanderfolgender Impedanzwerte zum Pendelungs-Mittelpunkt $X_0$ im Wesentlichen überein, so ist dies als Anzeichen auf eine stattfindende Pendelung zu werten. Konkret kann die Überprüfung hinsichtlich des gleichbleibenden Abstandes vom Pendelungs-Mittelpunkt $X_0$ beispielsweise durchgeführt werden, indem ausgehend vom Pendelungs-Mittelpunkt $X_0$ Impedanzzeiger $\underline{Z}_k$, $\underline{Z}_{k-1}$, $\underline{Z}_{k-2}$ und $\underline{Z}_{k-3}$ gebildet werden, die ihren Ursprung im Pendelungs-Mittelpunkt $X_0$ haben und bis zu dem jeweiligen Impedanzwert $Z_k$ bis $Z_{k-3}$ reichen. Stimmen die Beträge aufeinanderfolgender Impedanzzeiger etwa überein, so bleibt der Abstand nahezu gleich.

Außerdem wird die Geschwindigkeit betrachtet, mit der die zeitlich nacheinander aufgenommenen Impedanzwerte $Z_k$ bis $Z_{k-3}$ auf dem Kurvenverlauf voranschreiten. Bleibt auch die Geschwindigkeit bei aufeinanderfolgenden Impedanzwerten etwa konstant, so ist auch dies als Anzeichen auf eine Pendelung zu werten. Zur Bestimmung der Geschwindigkeit, mit der die Impedanzwerte $Z_k$ bis $Z_{k-3}$ auf dem Kurvenverlauf voranschreiten, kann beispielsweise die jeweilige Winkelgeschwindigkeit herangezogen werden, mit der die jeweiligen Impedanzzeiger $\underline{Z}_k$ bis $\underline{Z}_{k-3}$ ausgehend vom Pendelungs-Mittelpunkt $X_0$ eine Drehung erfahren. Bleibt diese konstant, so ist bei gleichzeitig gleichbleibendem Abstand vom Pendelungs-Mittelpunkt $X_0$ auch die Geschwindigkeit der Impedanzwerte $Z_k$ bis $Z_{k-3}$ auf dem Kurvenverlauf gleichbleibend. Gleichbleibende Winkelgeschwindigkeiten können als weiterer Anhaltspunkt auf eine elektrische Pendelung gewertet werden.

Da bei einer Abtastung der Strom und Spannung charakterisierenden Messwerte i bzw. u (vgl. Figur 1) mit konstanter Abtastrate der zeitliche Abstand zwischen den jeweiligen Impedanzzeigern $\underline{Z}_k$ bis $\underline{Z}_{k-3}$ immer konstant ist, kann die Winkelgeschwindigkeit proportional zum jeweils überstrichenen Winkel $\varphi_k$ bis $\varphi_{k-3}$ angenommen werden. So ist die Winkelgeschwindigkeit des aktuellen Impedanzzeigers $\underline{Z}_k$ proportional zu demjenigen Winkel $\varphi_k$, der seit dem unmittelbar vorangehenden Impedanzzeiger $\underline{Z}_{k-1}$ überstrichen worden ist. Die dem Impedanzzeiger $\underline{Z}_{k-1}$ zugeordnete Winkelgeschwindigkeit ist proportional zum Winkel $\varphi_{k-1}$, der seit dem diesem Impedanzzeiger $\underline{Z}_{k-1}$ unmittelbar vorangehenden Impedanzzeiger $\underline{Z}_{k-2}$ überstrichen worden ist. Die weiteren Winkelgeschwindigkeiten bestimmen sich in entsprechender Weise.

Ist der zeitliche Abstand zwischen den jeweiligen Impedanzzeigern, beispielsweise $\underline{Z}_k$ und $\underline{Z}_{k-1}$, bekannt, so kann die Winkelgeschwindigkeit auch durch Quotientenbildung aus dem jeweiligen überstrichenen Winkel und diesem zeitlichen Abstand explizit bestimmt werden; zur Betrachtung im Rahmen der Pendelerkennung ist allerdings der bei konstanter Abtastrate überstrichene Winkel ausreichend. Wenn im Folgenden von einer Winkelgeschwindigkeit gesprochen wird, sind daher unter diesem Begriff sowohl die explizit bestimmte Winkelgeschwindigkeit als auch der dazu proportionale Winkel bei angenommener gleichbleibender Abtastrate zu verstehen. Entsprechendes gilt für eine später näher behandelte Winkelbeschleunigung.

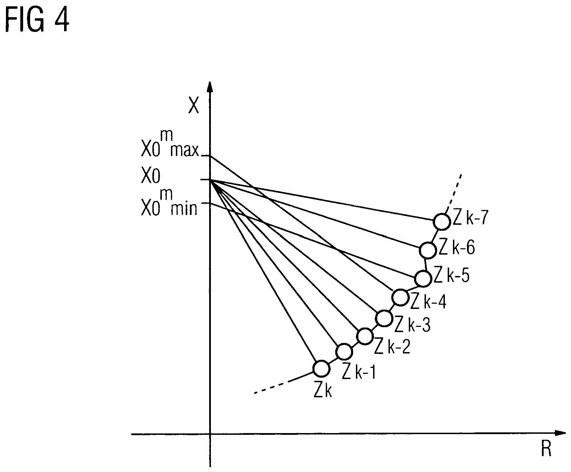

Anhand von Figur 4 soll die Berechnung des Pendelungs-Mittelpunktes $X_0$ näher erläutert werden.

Der Pendelungs-Mittelpunkt $X_0$ wird unter Zuhilfenahme eines Least-Square-Schätzverfahrens bestimmt, wie es beispielsweise in der bereits eingangs erwähnten deutschen Patentschrift DE 19746719 C1 beschrieben ist. Hierbei wird einerseits mit hinreichender Genauigkeit angenommen, dass der Pendelungs-Mittelpunkt $X_0$ immer auf der imaginären Achse des R-X-Diagramms liegt, sodass lediglich sein imaginärer Anteil bestimmt werden muss. Der Pendelungs-Mittelpunkt $X_0$ wird aus mehreren Teilmittelpunkten $X_0^m$ bestimmt. Unter Verwendung des Least-Square-Schätzverfahrens ergibt sich der ein solcher Teilmittelpunkt $X_0^m$ gemäß folgender Gleichung:

$$X_0^m = Zx_m + \frac{dZr_m}{dZx_m} \cdot Zr_m \quad ,$$

wobei m für den jeweiligen Abtastzeitpunkt steht; Zx gibt den imaginären Anteil (Reaktanz), Zr den realen Anteil (Resistanz) des jeweiligen Impedanzwertes an. Die Ableitung der Reaktanz Zx und der Resistanz Zr werden mit einem Verfahren 2. Ordnung gemäß folgender Gleichungen gebildet:

$$dZr = Zr_m - Zr_{m-1}$$

und

$$dZx = Zx_m - Zx_{m-1} \quad .$$

Durch arithmetische Mittelwertbildung kann aus mehreren Teilmittelpunkten $X_0^m$ ein Pendelungs-Mittelpunkt $X_0$ gebildet werden. Dies soll im Folgenden kurz erläutert werden.

Hierzu sei angenommen, dass ein jeweiliger Teilmittelpunkt $X_0^m$ für einen betrachteten Impedanzwert unter Verwendung der oben genannten Gleichung jeweils unter Heranziehung des betrachteten Impedanzwertes selbst sowie der beiden diesem vorangehenden Impedanzwerte erfolgt. Der Teilmittelpunkt $X_0^k$ für den aktuellen Impedanzwert $Z_k$ ergibt sich folglich unter Betrachtung der Impedanzwerte $Z_k$, $Z_{k-1}$ und $Z_{k-2}$. Der Teilmittelpunkt $X_0^{k-1}$ für den Impedanzwert $Z_{k-1}$ ergibt sich entsprechend unter Heranziehung der Impedanzwerte $z_{k-1}$, $z_{k-2}$ und $z_{k-3}$.

Zur Bestimmung des Pendelungsmittelpunktes $x_0$ wird nun eine bestimmte Anzahl solcher Teilmittelpunkte $x_0^m$ arithmetisch gemittelt, wobei diese Anzahl von Teilmittelpunkten $x_0^m$ beispielsweise den Wert 8 annehmen kann, wenn der Pendelungs-Mittelpunkt $X_0$ jeweils unter Verwendung der letzten 8 Teilmittelpunkte $X_0^m$ erzeugt werden soll. In diesem Fall würden zur Bestimmung des Pendelungs-Mittelpunktes $x_0$ für den aktuellen Impedanzwert $Z_k$ die für die Impedanzwerte $z_k$ bis $z_{k-7}$ berechneten Teilmittelpunkte $X_0^k$ bis $X_0^{k-7}$ her-

angezogen und arithmetisch gemittelt.

Dadurch, dass die Bestimmung des Pendelungs-Mittelpunktes $X_0$ jeweils nur bezüglich einer begrenzten Anzahl von Impedanzwerten durchgeführt wird, kann eine allmähliche Mittelpunktsverschiebung, wie sie beispielsweise bei mehrfachem Durchlaufen des bei Pendelungen üblichen elliptischen Kurvenverlaufes auftreten kann, entsprechend berücksichtigt werden, sodass eine solche Mittelpunktsverschiebung berücksichtigt werden kann und nicht zwangsläufig zur Nichtabgabe des Pendelsignals führt.

Um auch im Falle eines leicht ungleichmäßig verlaufenden Kurvenverlaufes dennoch einen zuverlässigen Wert für den Pendelungs-Mittelpunkt $X_0$ zu erhalten, kann bei seiner Bestimmung aus den einzelnen Teilmittelpunkten $X_0^m$ so vorgegangen werden, dass jeweils derjenige Teilmittelpunkt $X_0^m{}_{max}$ mit dem größten imaginären Anteil und derjenige Teilmittelpunkt $X_0^m{}_{min}$ mit dem kleinsten imaginären Anteil entfernt werden und aus den übrigen Teilmittelpunkten $X_0^m$ dann unter Anwendung der arithmetischen Mittelung der Pendelungs-Mittelpunkt $X_0$ bestimmt wird.

Im Beispiel von Figur 4 ist zu erkennen, dass es sich bei dem Impedanzwert $Z_{k-5}$ um einen sogenannten Ausreißer handelt; der Impedanzwert $Z_{k-5}$ liegt nämlich nicht auf einer idealen elliptischen Bahnkurve mit den übrigen Impedanzwerten $Z_k$ bis $Z_{k-4}$, $Z_{k-6}$ und $Z_{k-7}$. Hierdurch ergeben sich in Figur 4 jeweils übertrieben dargestellte verfälschte Teilmittelpunkte $X_0^m{}_{min}$ und $X_0^m{}_{max}$, die eine Berechnung des Pendelungs-Mittelpunktes $X_0$ negativ beeinflussen könnten. Solche Ausreißer werden dadurch kompensiert, dass der größte Teilmittelpunkt $X_0^m{}_{max}$ und der kleinste Teilmittelpunkt $X_0^m{}_{min}$ aus der arithmetischen Mittelwertbildung herausgenommen werden und nur die verbleibenden Teilmittelpunkte zur Bildung des arithmetischen Mittels für die Bestimmung des Pendelungs-Mittelpunkts $X_0$ verwendet werden.

Um eine Bildung eines Pendelungs-Mittelpunktes $X_0$ bei einem vollständig unregelmäßigen Kurvenverlauf der Impedanzwerte zu verhindern, kann zudem bezüglich der verbleibenden Teilmittelpunkte eine Plausibilitätsprüfung dahingehend vorgenommen werden, dass geprüft wird, ob eine Streuung dieser Teilmittelpunkte innerhalb eines gewissen Rahmens liegt. So kann beispielsweise bezüglich dieser Teilmittelpunkte eine Standardabweichung bestimmt werden und nur dann ein Pendelungs-Mittelpunkt $X_0$ berechnet werden, wenn die Standardabweichung unter einem bestimmten Plausibilitäts-Schwellenwert, der beispielsweise zwischen 10% und 15% angesiedelt sein kann, liegt. Schlägt eine solche Plausibilitätsprüfung fehl, sind die Teilmittelpunkte zu stark gestreut angeordnet. In einem solchen Fall würde eine Berechung des Pendelungs-Mittelpunktes $X_0$ nicht mit ausreichender Genauigkeit durchgeführt werden können, um eine Verlässliche Aussage treffen darüber zu können, ob eine Pendelung vorliegt. Daher wird im Falle einer fehlgeschlagenen Plausibilitätsprüfung die Berechnung des Pendelungs-Mittelpunktes $X_0$ abgebrochen und im mit Erfassung des nächstfolgenden Impedanzwertes fortgesetzt.

Figur 5 zeigt ein Ausführungsbeispiel einer Pendelerkennungseinrichtung 50. Die Pendelerkennungseinrichtung 50 gemäß Figur 5 verwendet zur Erkennung eines auf eine Pendelung hinweisenden Kurvenverlaufes die im Zusammenhang mit Figur 3 beschriebenen Kriterien.

In einem ersten Funktionsblock 51 wird gemäß Figur 5, wie zu Figur 4 beschrieben, der Pendelungs-Mittelpunkt $X_0$ für den jeweils aktuellen Impedanzwert $Z_n$ bestimmt. In einem folgenden Funktionsblock 52 werden für die Impedanzwerte $Z_n$ Impedanzzeiger $\underline{Z}_n$ berechnet, die in dem jeweiligen Pendelungs-Mittelpunkt $X_0$ starten und in dem jeweiligen Impedanzwert $Z_n$ enden. Für jeden Impedanzzeiger $\underline{Z}_n$ wird dessen Betrag $|\underline{Z}_n|$, also seine Länge, sowie der seit dem vorangehenden Impedanzwert $Z_n$ überstrichene Winkel $\varphi_n$ bestimmt.

In einem weiteren Funktionsblock 53 wird geprüft, ob die Abstände der jeweiligen Impedanzwerte $Z_n$ von dem gemeinsamen Pendelungs-Mittelpunkt $X_0$ im Wesentlichen konstant bleiben. Hierzu wird das Verhältnis $\underline{Z}_k/\underline{Z}_{k-1}$ aus dem Betrag des aktuellen Impedanzzeigers $\underline{Z}_k$ und dem Betrag des diesem unmittelbar vorausgehenden Impedanzzeigers $\underline{Z}_{k-1}$ bestimmt. Stimmen diese beiden Beträge überein, so liegt das Resultat nahe dem Wert 1, beispielsweise innerhalb des Bereiches von 0,95 bis 1,05. Wird im Funktionsschritt 53 erkannt, dass die Beträge der Impedanzzeiger $\underline{Z}_k$ und $\underline{Z}_{k-1}$ - und damit auch die Abstände der Impedanzwerte $Z_n$ vom Pendelungs-Mittelpunkt $X_0$ - nahezu konstant bleiben, so wird ein erstes Pendelverdachtssignal PV1 erzeugt und einem ersten Eingang eines logischen UND-Gliedes zugeführt.

Das Erzeugen eines Signals bedeutet im Sinne der Datenverarbeitung üblicherweise die Generierung eines sogenannten "high"-Signals, also einer logischen "1", während das Nichterzeugen bzw. Nichtvorliegen eines Signals einem sogenannten "low"-Signal bzw. einer logischen "0" entspricht. Die in dieser Patentanmeldung gemachten Ausführungen hinsichtlich der zur Pendelerkennung verwendeten unterschiedlichen Signale seien in diesem Sinne zu verstehen.

Zur einfacheren Berechnung kann auch vorgesehen sein, dass zunächst geprüft wird, welcher der beiden Beträge $\underline{Z}_k$ oder $\underline{Z}_{k-1}$ der größere ist. Danach kann ein Quotient gebildet werden, der den größeren der beiden Beträge im Nenner aufführt. In diesem Fall muss lediglich ein einziger Schwellenwertvergleich dahingehend durchgeführt werden, ob der Quotient unterhalb eines Schwellenwertes liegt, da der resultierende Quotient immer kleiner als 1 sein wird. Eine Überprüfung eines Bereiches mit einem oberen und einem unteren Schwellenwert wäre dann nicht notwendig.

In einem weiteren Funktionsblock 54, der parallel zu dem Funktionsblock 53 ausgeführt wird, wird geprüft, ob die Geschwindigkeit der Impedanzwerte auf dem Kurvenverlauf etwa konstant bleibt. Hierzu werden die jeweiligen überstrichenen Winkel betrachtet und es wird die Differenz $|\varphi_k - \varphi_{k-1}|$ zwischen dem aktuellen Winkel und dem Winkel des vorhergehenden Impedanzwertes bestimmt. Liegt der Betrag dieser Differenzbildung unterhalb eines Geschwindigkeits-Schwellenwertes, so bleibt die Geschwindigkeit der Impedanzwerte auf dem Kurvenverlauf weitgehend konstant und es wird ein zweites Pendelverdachtssignal PV2 erzeugt und einem zweiten Eingang des UND-Gliedes 55 zugeführt.

Liegen beide Pendelverdachtssignale PV1 und PV2 an den Eingängen des UND-Gliedes 55 vor, so wird von der Pendelerkennungseinrichtung 50 ein Pendelsignal P erzeugt, das auf eine vorliegende Pendelung hinweist.

Bei dem in Figur 5 beschriebenen Ausführungsbeispiel wurde Bezug auf einzelne Funktionsblöcke (z.B. Funktionsblöcke 51, 52, 53, 54) und logische Verknüpfungsbausteine (z.B. UND-Glied 55) genommen. Üblicherweise werden solche Funktionsbausteine und logische Verknüpfungen abweichend zur schematischen Darstellung der Figur 5 nicht als separate Schaltungseinheiten, sondern in Form einer von einer Recheneinrichtung, wie z.B. einem Mikroprozessor, abgearbeiteten Software realisiert sein. Eine Ausführung in Form diskreter Schaltungseinheiten ist natürlich ebenfalls möglich, jedoch mit größeren Aufwand verbunden. Dies gilt entsprechend für die im Folgenden behandelten weiteren Ausführungsbeispiele.

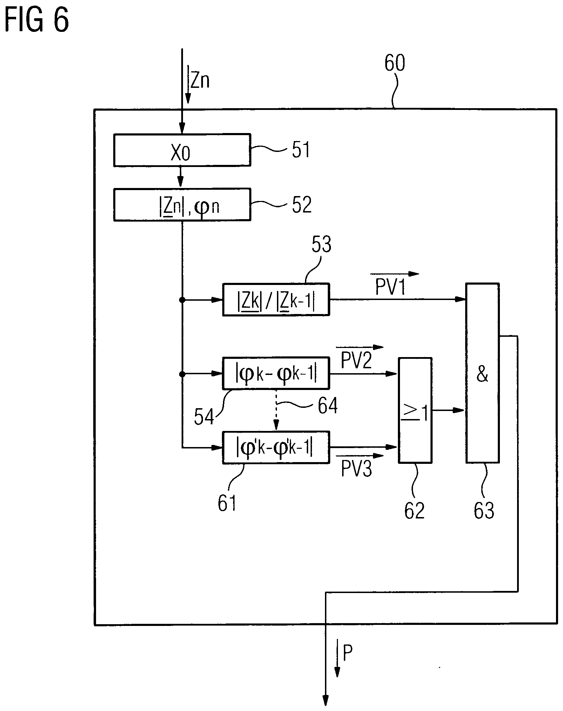

Figur 6 zeigt ein weiteres Ausführungsbeispiel einer Pendelerkennungseinrichtung 60. Die Pendelerkennungseinrichtung 60 erkennt zuverlässig auch solche Pendelungen, bei denen die Geschwindigkeit, mit der die einzelnen Impedanzwerte auf dem Kurvenverlauf voranschreiten, nicht konstant ist, wohl aber eine konstante (positive oder negative) Beschleunigung vorliegt. Auch ein solches Verhalten kann nämlich ein Hinweis auf eine bestehende Pendelung sein.

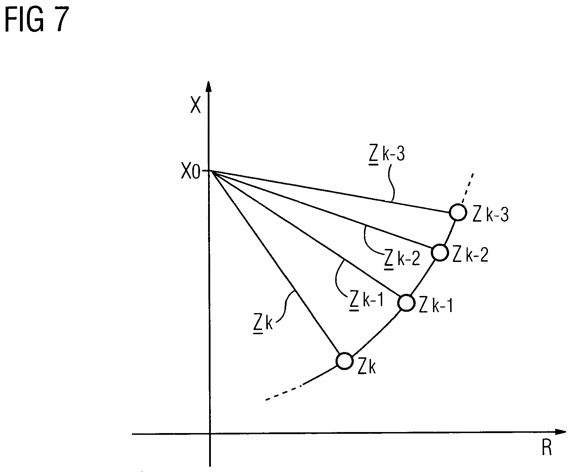

Hierzu sei zunächst Figur 7 herangezogen, die wiederum in einem R-X-Diagramm einen Verlauf von Impedanzwerten $Z_k$ bis $Z_{k-3}$ zeigt, die entlang einem annähernd elliptischen Kurvenverlauf angeordnet sind. Man erkennt, dass der überstrichene Winkel zwischen jeweils zwei aufeinanderfolgenden Impedanzwerten stetig zunimmt (so ist beispielsweise der Winkel zwischen den Impedanzwerten $Z_k$ und $Z_{k-1}$ deutlich größer als derjenige zwischen dem Impedanzwerten $Z_{k-2}$ und $Z_{k-3}$). Die Winkelerhöhung findet jedoch in gleichmäßiger Form statt, sodass eine konstante Winkelbeschleunigung der Impedanzzeiger $\underline{Z}_k$ bis $\underline{Z}_{k-3}$ vorliegt.

Da auch der Fall einer konstanten Winkelbeschleunigung auf eine Pendelung hinweisen kann, ist gemäß Figur 6 ein weiterer Funktionsblock 61 vorgesehen worden, der parallel zu den bereits aus Figur 5 bekannten Funktionsblöcken 53 (konstanter Abstand vom Pendelungs-Mittelpunkt $X_0$) und 54 (konstante Winkelgeschwindigkeit) durchgeführt wird. Gemäß diesem neu hinzugekommenen Funktionsblock 61 wird überprüft, ob die Winkelbeschleunigung nahezu konstant ist. Hierzu wird die zeitliche Ableitung der Winkelgeschwindigkeit (beziehungsweise des überstrichenen Winkels $\varphi$) gebildet und es wird ein drittes Pendelverdachtssignal PV3 erzeugt, wenn diese Differenz unterhalb eines Beschleunigungs-Schwellenwertes liegt und somit die Winkelbeschleunigung nahezu konstant ist.

Das dritte Pendelverdachtssignal PV3 wird einem Eingang eines ODER-Gliedes 62 zugeführt. Dem anderen Eingang des ODER-Gliedes 62 wird das in Funktionsschritt 54 erzeugte Pendelverdachtssignal PV2 zugeführt. Der Ausgang des ODER-Gliedes 62 wird eingangsseitig einem UND-Glied 63 zugeführt, dem an seinem anderen Eingang das Pendelverdachtssignal PV1 zugeführt wird. Das Pendelsignal P wird somit von der Pendelerkennungseinrichtung 60 dann abgegeben, wenn das erste und zweite Pendelverdachtssignal PV1 und PV2 oder das erste und dritte Pendelverdachtssignal PV1 und PV3 vorliegen.

Zur Begrenzung der benötigten Rechenkapazität und der Erhöhung der Reaktionsgeschwindigkeit, bis eine Entscheidung über das Pendelsignal P gefällt werden kann, kann außerdem vorgesehen sein, dass der Funktionsblock 61 nur dann aktiviert wird, wenn das zweite Pendelverdachtssignal PV2 nicht erzeugt wird, das heißt, wenn die Winkelgeschwindigkeit nicht gleichbleibend ist. In diesem Fall kann wie durch einen Pfeil 64 angedeutet, der Funktionsblock 61 von dem Funktionsblock 54 bei nicht vorliegendem zweitem Pendelverdachtssignal PV2 aktiviert werden, während er bei vorliegendem Pendelverdachtssignal PV2 deaktiviert bleibt.

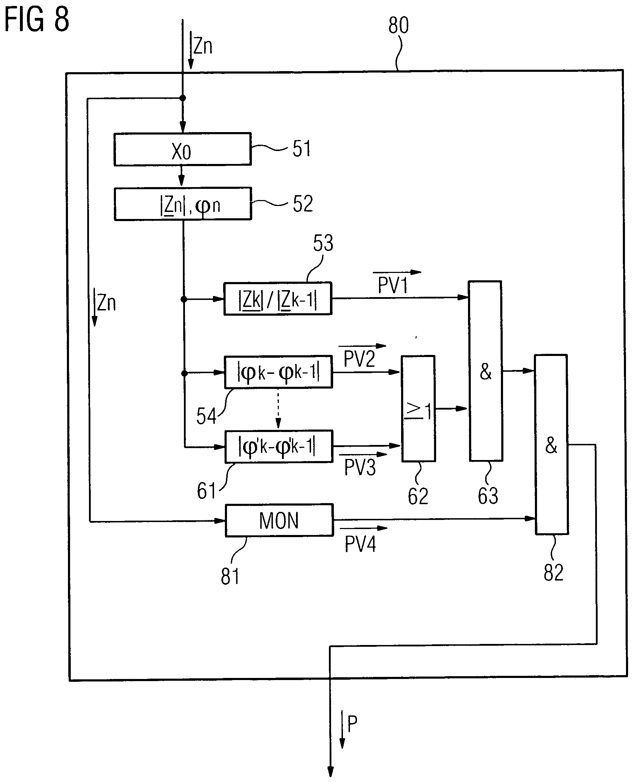

Figur 8 zeigt ein weiteres Ausführungsbeispiel einer Pendelerkennungseinrichtung 80, mit der eine noch zuverlässigere Pendelerkennung durchgeführt werden kann. Die Pendelerkennungseinrichtung 80 unterscheidet sich von der Pendelerkennungseinrichtung 60 gemäß Figur 6 durch einen weiteren Funktionsblock 81, in dem die Impedanzwerte $Z_n$ auf monotones Verhalten überprüft werden. Hierbei wird überprüft, ob bezüglich ihres Imaginärteils oder bezüglich ihres Realteils die Impedanzwerte monoton fallen oder steigen, und es wird ein viertes Pendelverdachtssignal PV4 erzeugt, wenn mindestens bezüglich des Realteils oder bezüglich des Imaginärteils ein monotones Verhalten vorliegt.

Das vierte Pendelverdachtssignal PV4 wird einem weiteren UND-Glied 82 zugeführt, zu dessen anderem Eingang der Ausgang des bereits in Figur 6 gezeigten UND-Gliedes 63 geführt ist. Gemäß Figur 8 wird ein Pendelsignal P von der Pendelerkennungseinrichtung 80 dann abgegeben, wenn das erste, zweite und vierte oder das erste, dritte und vierte Pendelverdachtssignal anstehen. Durch die Überprüfung des monotonen Verhaltens, zumindest bezüglich des Real- oder Imaginärteiles soll ein zu starkes Schwanken der Impedanzwerte, was gegen eine Pendelung sprechen würde, erkannt werden, und gegebenenfalls die Erzeugung eines Pendelsignals verhindert werden.

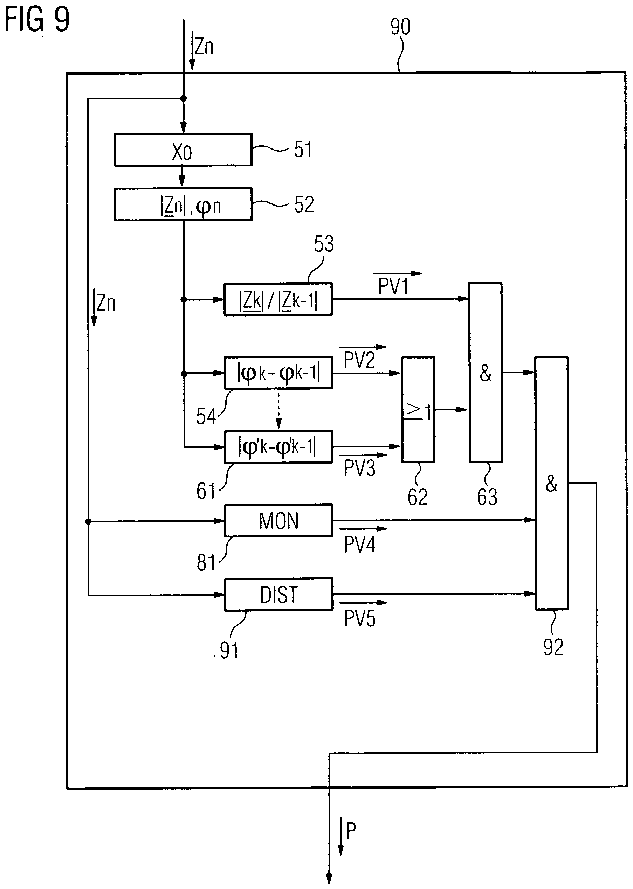

In Figur 9 ist ein weiteres Ausführungsbeispiel mit einer Pendelerkennungseinrichtung 90 gezeigt. Die Pendelerkennungseinrichtung 90 unterscheidet sich von der Pendelerkennungseinrichtung 80 gemäß Figur 8 durch einen weiteren Funktionsblock 91, in dem eine kontinuierliche Bewegung der Impedanzwerte $Z_n$ überprüft wird. Hierbei wird überprüft, ob bezüglich ihres Real- oder Imaginärteiles zwischen den einzelnen Impedanzwerten $Z_n$ ein Mindestabstand überschritten wird. Liegen die Impedanzwerte $Z_n$ nämlich zu dicht beieinander, so ist dies ein Hinweis gegen eine Pendelung und eher für einen relativ stabilen Fehler, bei dem Impedanzwerte $Z_n$ mit etwa konstantem Wert bestimmt werden.

Wird im Funktionsblock 91 eine kontinuierliche Bewegung der Impedanzwerte $Z_n$ festgestellt, so wird ein fünftes Pendelverdachtssignal PV5 erzeugt, das einem UND-Glied 92 zugeführt wird. Das UND-Glied 92 ist ferner mit dem vierten Pendelverdachtssignal sowie dem Ausgang des UND-Gliedes 63 (vergleiche Figur 6) beaufschlagt. Die Pendelerkennungseinrichtung 90 gibt daher ein Pendelsignal P ab, wenn entweder das erste, zweite, vierte und fünfte oder das erste, dritte, vierte und fünfte Pendelverdachtssignal vorliegen.

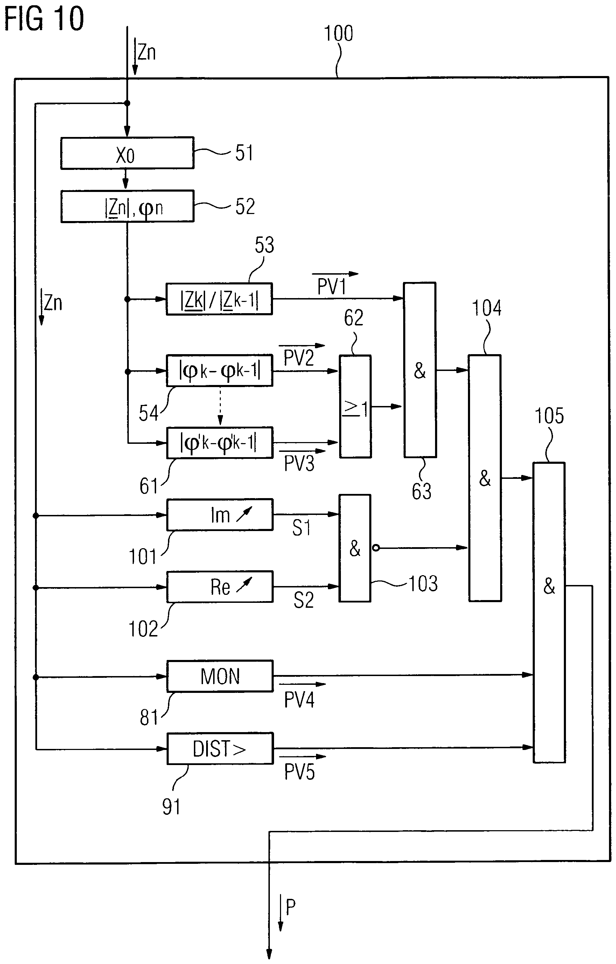

Figur 10 zeigt ein letztes Ausführungsbeispiel einer Pendelerkennungseinrichtung 100. Die Pendelerkennungseinrichtung 100 überprüft zusätzlich, ob der durch die Impedanzwerte $Z_n$ beschriebene Kurvenverlauf plötzliche Sprünge aufweist. Hierzu ist ein Funktionsblock 101 vorgesehen, der prüft, ob zwischen zwei aufeinanderfolgenden Impedanzwerten $Z_n$ bezüglich ihres Imaginärteils eine sprunghafte Änderung auftritt. Eine solche sprunghafte Änderung kann beispielsweise detektiert werden, wenn die Änderung der Imaginärteile zweier aufeinanderfolgender Impedanzwerte eine fest vorgegebene oder eine dynamisch an den bisherigen Verlauf der Impedanzwerte angepasste Schwelle überschreitet. Wird im Funktionsblock 101 eine sprunghafte Änderung zwischen zwei aufeinanderfolgenden Impedanzwerten bezüglich ihres Imaginärteils festgestellt, so wird ein erstes Sprungsignal S1 an einen Eingang eines sogenannten NAND-Gliedes 103 abgegeben.

Ein weiterer Funktionsblock 102 führt eine entsprechende Überprüfung bezüglich der Realteile zweier aufeinanderfolgender Impedanzwerte durch und gibt ein zweites Sprungsignal S2 an das NAND-Glied 103 ab, wenn eine sprunghafte Änderung zwischen zwei aufeinanderfolgenden Impedanzwerten bezüglich ihrer Realteile erkannt worden ist.

Das NAND-Glied 103 gibt genau dann ein Ausgangssignal ab, wenn keiner oder maximal einer seiner Eingänge belegt ist, das heißt, wenn maximal das erste oder das zweite Sprungsignal S1 oder S2 aufgetreten sind. In diesem Fall gibt das NAND-Glied 103 ein Ausgangssignal an den Eingang eines UND-Gliedes 104 ab, dessen weiterer Eingang mit dem Ausgang des UND-Gliedes 63 (vergleiche Figur 6) beaufschlagt ist. Erhält das UND-Glied 104 an beiden seiner Eingänge ein Eingangssignal, so gibt es ein Ausgangssignal an ein UND-Glied 105 ab, das mit seinen weiteren Eingängen mit den bereits in Figuren 8 und 9 behandelten Pendelverdachtssignalen PV4 und PV5 beaufschlagt ist.

Die Pendelverdachtseinrichtung 100 gibt ausgangsseitig ein Pendelsignal P ab, wenn jeder Eingang des UND-Gliedes 105 mit einem Eingangssignal beaufschlagt ist.

Zusammengefasst wird bei dem Ausführungsbeispiel gemäß Figur 10 also überprüft, ob der durch die Impedanzwerte $Z_n$ beschriebene Kurvenverlauf ein sprunghaftes Verhalten aufweist. Wird ein Sprung detektiert, der sich sowohl auf den Imaginärteil als auch auf den Realteil zweier aufeinanderfolgender Impedanzwerte bezieht, so deutet dies auf einen Fehler hin und es darf kein Pendelsignal P abgegeben werden. In diesem Fall gibt das NAND-Glied 103 kein Ausgangssignal ab, da es sowohl mit dem ersten als auch dem zweiten Sprungsignal S1 und S2 beaufschlagt ist. In der Folge erzeugt das UND-Glied 104 kein Ausgangssignal, wodurch auch das UND-Glied 105 an der Abgabe eines Ausgangssignals gehindert wird.

Liegt jedoch nur das erste oder nur das zweite Sprungsignal S1 oder S2 vor, das heißt, bezieht sich der erkannte Sprung zwischen zwei aufeinanderfolgenden Impedanzwerten nur auf deren Imaginär- oder nur auf deren Realteil, so kann bei Vorliegen der übrigen Pendelverdachtsbedingungen dennoch ein Pendelsignal erzeugt werden.

Ein solcher Sprung bezüglich nur des Imaginär- oder nur des Realteils kann beispielsweise im Wendepunkt (das heißt ganz oben und unten oder rechts oder lins) des von den Impedanzwerten $Z_n$ durchlaufenden elliptischen Kurvenverlaufes auftreten. Beispielsweise ändern sich im unteren Wendepunkt die imaginären Anteile aufeinanderfolgender Impedanzwerte nur marginal, während die Realanteile aufeinanderfolgender Impedanzwerte eine größere Änderung aufweisen. Da in diesem Fall jedoch nur ein bei Pendelungen üblicher elliptischer Kurvenverlauf beschrieben wird, deutet auch dies auf eine Pendelung hin und ein Pendelsignal darf nicht unterdrückt werden.

Liegen weder bezüglich des Imaginärteils noch des Realteils Sprünge vor, so darf das Pendelsignal ebenfalls nicht unterdrückt werden.

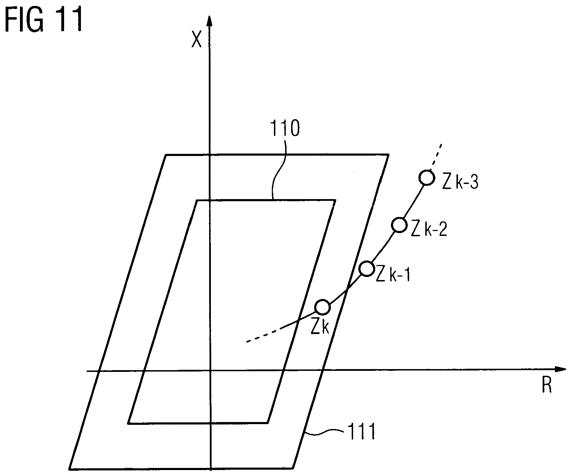

In Figur 11 ist schließlich in einem R-X-Diagramm eine Folge aufeinanderfolgender Impedanzwerte $Z_k$ bis $Z_{k-3}$ dargestellt. Figur 11 zeigt zudem ein zur Durchführung eines Distanzschutzes verwendetes Auslösepolygon 110. Wie bereits im Zusammenhang mit Figur 2 erläutert, ist der Distanzschutzalgorithmus derart eingestellt, dass beim Eintreten eines Impedanzwertes in das Auslösepolygon ein Auslösesignal an einen Leistungsschalter abgegeben wird, sofern dieses nicht durch ein Pendelsignal einer Pendelerkennungseinrichtung unterdrückt wird. Figur 11 zeigt ferner ein in einigem Abstand (beispielsweise im Abstand von 5 Q) um das Auslösepolygon aufgebautes sogenanntes Pendelpolygon 111. Das Pendelpolygon 111 hat die Funktion, dass die Ausgabe eines Pendelsignals, das üblicherweise auch in Form einer eine Pendelung angebenden Meldung an den Betreiber des elektrischen Energieversorgungsnetzes ausgegeben wird, nur dann abgegeben wird, wenn der erste Impedanzwert in das Pendelpolygon eingetreten ist. Hierdurch soll eine unnötig verwirrende Abgabe von Pendelmeldungen an den Betreiber eines elektrischen Energieversorgungsnetzes unterbunden werden, da Pendelungen, die in hinreichend großem Abstand zum Auslösepolygon 110 stattfinden, keine Gefährdung darstellen und für die Durchführung der Distanzschutzfunktion auch nicht relevant sind.

Zusammenfassend beschreiben die erläuterten Ausführungsbeispiele mehrere Möglichkeiten, charakteristische Merkmale eines durch Impedanzwerte beschriebenen Kurvenverlaufes daraufhin zu analysieren, ob sie auf ein bei Pendelungen übliches Verhalten oder eher auf einen Fehler im elektrischen Energieversorgungsnetz hindeuten. Werden charakteristische Merkmale eines bei einer Pendelung auftretenden Kurvenverlaufes entdeckt, so wird entsprechend einer logischen Verknüpfung von entsprechenden Signalen gegebenenfalls ein Pendelsignal erzeugt, das die Abgabe eines Auslösesignals durch ein Distanzschutzgerät verhindert, um nicht im Falle einer prinzipiell eher ungefährlichen Netzpendelung die betroffenen Netzteile vom restlichen Netz zu trennen.

**Patentansprüche**

1.  Verfahren zum Erzeugen eines eine Pendelung in einem elektrischen Energieversorgungsnetz anzeigenden Pendelsignals, bei dem

    - Strom und Spannung an einer Messstelle des elektrischen Energieversorgungsnetzes charakterisierende Messwerte erfasst und in digitale Strom- und Spannungszeigermesswerte umgesetzt werden; und
    - aus den Stromzeigermesswerten und den Spannungszeigermesswerten in der komplexen Zahlenebene liegende Impedanzwerte berechnet werden; und
    - ein durch die Impedanzwerte gebildeter Kurvenverlauf betrachtet wird und unter Heranziehung charakteristischer Eigenschaften des Kurvenverlaufs das Pendelsignal erzeugt wird; **dadurch gekennzeichnet, dass**
    - ein erstes Pendelverdachtssignal erzeugt wird, wenn der Abstand der Impedanzwerte von einem Pendelungs-Mittelpunkt im Wesentlichen gleich bleibt;
    - ein zweites Pendelverdachtssignal erzeugt wird, wenn die Geschwindigkeit, mit der die Impedanzwerte auf dem Kurvenverlauf voranschreiten, im Wesentlichen gleich bleibt; und
    - das Pendelsignal erzeugt wird, wenn sowohl das erste als auch das zweite Pendelverdachtssignal vorliegen.

2.  Verfahren nach Anspruch 1, **dadurch gekennzeichnet, dass** zur Erzeugung des ersten Pendelverdachtssignals

    - für die auf dem Kurvenverlauf liegenden Impedanzwerte jeweils ein von dem Pendelungs-Mittelpunkt ausgehender Impedanzzeiger bestimmt wird; und
    - der Betrag des jeweiligen Impedanzzeigers berechnet wird, und das erste Pendelverdachtssignal erzeugt wird, wenn das Verhältnis der Beträge zweier unmittelbar aufeinanderfolgender Impedanzzeiger innerhalb eines vorgegebenen Bereiches um den Wert 1 liegt.

3.  Verfahren nach Anspruch 1 oder 2, **dadurch gekennzeichnet, dass** zur Erzeugung des zweiten Pendelverdachtssignals

    - für die auf dem Kurvenverlauf liegenden Impedanzwerte jeweils ein von dem Pendelungs-Mittelpunkt ausgehender Impedanzzeiger bestimmt wird;
    - für den aktuellen Impedanzzeiger und den diesem unmittelbar vorausgehenden Impedanzzeiger jeweils eine Winkelgeschwindigkeit bestimmt wird; und
    - das zweite Pendelverdachtssignal erzeugt wird, wenn die Different der Winkelgeschwindigkeiten einen vorgegebenen Geschwindigkeits-Schwellenwert unterschreitet.

4.  Verfahren nach Anspruch 3, **dadurch gekennzeichnet, dass**

    - zur Bestimmung der Winkelgeschwindigkeit jeweils der Winkel zwischen dem betrachteten Impedanzzeiger und dem diesem unmittelbar vorangehenden Impedanzzeiger betrachtet wird.

5.  Verfahren nach einem der vorangehenden Ansprüche, **dadurch gekennzeichnet, dass**

    - ein drittes Pendelverdachtssignal erzeugt wird, wenn die Beschleunigung, mit der die Impedanzwerte auf dem Kurvenverlauf voranschreiten, im wesentlichen gleich bleibt; und
    - das Pendelsignal auch dann erzeugt wird, wenn das erste und das dritte Pendelverdachtssignal vorliegen.

6.  Verfahren nach Anspruch 5, **dadurch gekennzeichnet, dass**

    - das dritte Pendelverdachtssignal nur dann erzeugt wird, wenn lediglich das erste Pendelverdachtssignal vorliegt.

7. Verfahren nach Anspruch 5 oder 6, **dadurch gekennzeichnet, dass** zur Erzeugung des dritten Pendelverdachtssignals

   - für die auf dem Kurvenverlauf liegenden Impedanzwerte jeweils ein von dem Pendelungs-Mittelpunkt ausgehender Impedanzzeiger bestimmt wird;
   - für den aktuellen Impedanzzeiger und den diesem unmittelbar vorausgehenden Impedanzzeiger jeweils eine Winkelbeschleunigung bestimmt wird; und
   - das dritte Pendelverdachtssignal erzeugt wird, wenn die Differenz der Winkelbeschleunigungen einen vorgegebenen Beschleunigungs-Schwellenwert unterschreitet.

8. Verfahren nach einem der vorangehenden Ansprüche, **dadurch gekennzeichnet, dass** zur Bestimmung des Pendelungs-Mittelpunktes

   - für den aktuellen Impedanzwert und einer Anzahl von diesem unmittelbar vorangehenden Impedanzwerten jeweils Teil-Mittelpunkte bestimmt werden;
   - diejenigen Teil-Mittelpunkte mit dem größten und dem kleinsten Imaginärteil entfernt werden; und
   - aus den verbleibenden Teil-Mittelpunkten der Pendelungs-Mittelwert als arithmetisches Mittel bestimmt wird.

9. Verfahren nach Anspruch 8, **dadurch gekennzeichnet, dass**

   - aus den verbleibenden Teilmittelpunkten nur dann der Pendelungs-Mittelpunkt bestimmt wird, wenn die Standardabweichung der Verteilung der Teil-Mittelpunkte unterhalb eines vorgegebenen Plausibilitäts-Schwellenwertes liegt.

10. Verfahren nach Anspruch 8 oder 9, **dadurch gekennzeichnet, dass**

    - die Bestimmung der Teil-Mittelpunkte mittels eines Least-Square-Schätzverfahrens durchgeführt wird.

11. Verfahren nach einem der vorangehenden Ansprüche, **dadurch gekennzeichnet, dass**

    - ein viertes Pendelverdachtssignal erzeugt wird, wenn der Kurvenverlauf ein monotones Verhalten aufweist; und
    - das Pendelsignal nur dann erzeugt wird, wenn auch das vierte Pendelverdachtssignal vorliegt.

12. Verfahren nach einem der vorangehenden Ansprüche, **dadurch gekennzeichnet, dass**

    - ein fünftes Pendelverdachtssignal erzeugt wird, wenn der Abstand zwischen jeweils zwei unmittelbar aufeinanderfolgenden Impedanzwerten einen vorgegebenen Abstands-Schwellenwert übersteigt; und
    - das Pendelsignal nur dann erzeugt wird, wenn auch das fünfte Pendel-Verdachtssignal vorliegt.

13. Verfahren nach einem der vorangehenden Ansprüche, **dadurch gekennzeichnet, dass**

    - ein erstes Sprungsignal erzeugt wird, wenn eine sprunghafte Änderung zwischen zwei unmittelbar aufeinanderfolgenden Impedanzwerten hinsichtlich ihrer Imaginärteile erkannt wird;
    - ein zweites Sprungsignal erzeugt wird, wenn eine sprunghafte Änderung zwischen zwei unmittelbar aufeinanderfolgenden Impedanzwerten hinsichtlich ihrer Realteile erkannt wird;
    - das Pendelsignal erzeugt wird, wenn nur eines der beiden Sprungsignale vorliegt und gleichzeitig

      - das erste und zweite Pendelverdachtssignal oder
      - das erste und dritte Pendelverdachtssignal vorliegen; und

    - das Pendelsignal blockiert wird, wenn beide Sprungsignale vorliegen.

14. Verfahren nach einem der vorangehenden Ansprüche, **dadurch gekennzeichnet, dass**

    - unter Verwendung der Impedanzwerte auch ein Distanzschutzverfahren durchgeführt wird; und
    - die Erzeugung eines Auslösesignals durch das Distanzschutzverfahren blockiert wird, wenn das Pendelsignal ansteht.

15. Verfahren nach Anspruch 14, **dadurch gekennzeichnet, dass**

    - bei der Durchführung des Distanzschutzverfahrens die Impedanzwerte daraufhin überprüft werden, ob sie innerhalb eines vorgegebenen Auslösepolygons liegen; und
    - das Pendelsignal nur dann abgegeben wird, wenn zumindest der aktuelle Impedanzwert innerhalb eines das Auslösepolygon umgebenden Pendelpolygons liegt.

16. Elektrisches Schutz- oder Messgerät (12) zum Überwachen eines elektrischen Energieversorgungsnetzes mit

    - einer Messwerterfassungs- und Vorverarbeitungseinrichtung (14) zum Erfassen und Verarbeiten von Strom und Spannung an einer Messstelle (11) des Energieversorgungsnetzes charakterisierenden Messwerten;
    - einer Steuereinrichtung (15) zum Verarbeiten der Messwerte; und
    - einer Pendelerkennungseinrichtung (18);
    **dadurch gekennzeichnet, dass**
    - die Pendelerkennungseinrichtung (18) zur Durchführung eines Verfahrens gemäß einem der Ansprüche 1 bis 14 eingerichtet ist.

**Claims**

1. Method for production of an oscillating signal which indicates an oscillation in an electrical power supply system, in which

    - measured values which characterize the current and voltage at a measurement point in the electrical power supply system are detected and are converted to digital current and voltage vector measured values; and
    - impedance values, which lie on the complex number plane, are calculated from the current vector measured values and the voltage vector measured values; and
    - a curve profile which is formed by the impedance values is considered, and the oscillating signal is produced using characteristic properties of the curve profile;
    **characterized in that**
    - a first oscillation suspicion signal is produced if the separation of the impedance values from an oscillation center point remains substantially constant;
    - a second oscillation suspicion signal is produced if the rate at which the impedance values progress on the curve profile remains substantially constant; and
    - the oscillation signal is produced if both the first and the second oscillation suspicion signals are present.

2. Method according to Claim 1,
    **characterized in that**
    in order to produce the first oscillation suspicion signal:

    - an impedance vector which originates from the oscillation center point is determined for each of the impedance values which lie on the curve profile; and
    - the magnitude of the respective impedance vector is calculated, and the first oscillation suspicion signal is produced if the ratio of the magnitudes of two immediately successive impedance vectors is within a predetermined range around the value 1.

3. Method according to Claim 1 or 2,
    **characterized in that**
    in order to produce the second oscillation suspicion signal:

    - an impedance vector which originates from the oscillation center point is determined for each of the impedance values which lie on the curve profile;
    - an angle rate is determined for the instantaneous impedance vector and the impedance vector which immediately precedes it; and
    - the second oscillation suspicion signal is produced if the difference between the angle rates is less than a predetermined rate threshold value.

4. Method according to Claim 3,
    **characterized in that**

    - the angle between the impedance vector being considered and the impedance vector which immediately precedes it is in each case considered in order to determine the angle rate.

5. Method according to one of the preceding claims,
    **characterized in that**

    - a third oscillation suspicion signal is produced if the acceleration with which the impedance values progress on the curve profile remains substantially constant; and
    - the oscillation signal is also produced when the first and the third oscillation suspicion signals are present.

6. Method according to Claim 5,
    **characterized in that**

    - the third oscillation suspicion signal is produced only if only the first oscillation suspicion signal is present.

7. Method according to Claim 5 or 6,
    **characterized in that**,
    in order to produce the third oscillation suspicion signal:

- an impedance vector which originates from the oscillation center point is determined for each of the impedance values which lie on the curve profile;

- an angular acceleration is determined for the instantaneous impedance vector and the impedance vector which immediately precedes it; and

- the third oscillation suspicion signal is produced if the difference between the angular accelerations is less than a predetermined acceleration threshold value.

8. Method according to one of the preceding claims, **characterized in that**
in order to determine the oscillation center point:

- partial center points are in each case determined for the instantaneous impedance value and a number of impedance values which immediately precede it;

- those partial center points with the largest and the smallest imaginary parts are removed; and

- the oscillation mean value is determined as the arithmetic mean from the remaining partial center points.

9. Method according to Claim 8, **characterized in that**

- the oscillation center point is determined from the remaining partial center points only if the standard deviation of the distribution of the partial center points is below a predetermined plausibility threshold value.

10. Method according to Claim 8 or 9, **characterized in that**

- the partial center points are determined by means of a least-squares estimation method.

11. Method according to one of the preceding claims, **characterized in that**

- a fourth oscillation suspicion signal is produced if the curve profile has a monotonic behavior; and

- the oscillation signal is produced only if the fourth oscillation suspicion signal is also present.

12. Method according to one of the preceding claims, **characterized in that**

- a fifth oscillation suspicion signal is produced if the interval between in each case two immediately successive impedance values exceeds a predetermined interval threshold value; and

- the oscillation signal is produced only if the fifth oscillation suspicion signal is also present.

13. Method according to one of the preceding claims, **characterized in that**

- a first sudden-change signal is produced if a sudden change is identified between the imaginary parts of two immediately successive impedance values;

- a second sudden-change signal is produced if a sudden change is identified between the real parts of two immediately successive impedance values;

- the oscillation signal is produced if only one of the two sudden-change signals is present and, at the same time,

- the first and the second oscillation suspicion signals are present, or

- the first and the third oscillation suspicion signals are present; and

- the oscillation signal is blocked if both sudden-change signals are present.

14. Method according to one of the preceding claims, **characterized in that**

- a distance protection method is also carried out using the impedance values; and

- the production of a tripping signal is blocked by the distance protection method when the oscillation signal is present.

15. Method according to Claim 14, **characterized in that**

- when carrying out the distance protection method, the impedance values are checked to determine whether they lie within a predetermined tripping polygon; and

- the oscillation signal is emitted only if at least the instantaneous impedance value lies within an oscillation polygon which surrounds the tripping polygon.

16. Electrical protection device or measurement instrument (12) for monitoring an electrical power supply system, having

- a measured-value detection and preprocessing device (14) for detection and processing of measured values which characterize the current and voltage at a measurement point (11) in the power supply system;

- a control device (15) for processing the measured values; and

- an oscillation identification device (18); **characterized in that**

- the oscillation identification device (18) is designed to carry out a method according to one of Claims 1 to 14.

**Revendications**

1. Procédé de production d'un signal d'oscillation indiquant une oscillation dans un réseau d'alimentation en énergie électrique, dans lequel

   - on relève des valeurs de mesure caractérisant le courant et la tension en un point de mesure du réseau d'alimentation en énergie électrique et on les transforme en valeurs de mesure vectorielles numériques de courant et de tension et
   - à partir des valeurs de mesure vectorielles de courant et des valeurs de mesure vectorielles de tension, on calcule des valeurs d'impédance dans le plan complexe et
   - on considère la courbe formée par les valeurs d'impédance et, en tirant partie des propriétés caractéristiques de la courbe, on produit le signal d'oscillation ;
   **caractérisé en ce que**
   - on produit un premier signal imaginaire d'oscillation si la distance des valeurs d'impédance à un centre d'oscillation reste sensiblement la même ;
   - on produit un deuxième signal imaginaire d'oscillation si la vitesse à laquelle les valeurs d'impédance suivent la courbe reste sensiblement la même et
   - on produit le signal d'oscillation si il y a à la fois le premier et le deuxième signal imaginaire d'oscillation.

2. Procédé suivant la revendication 1,
   **caractérisé en ce que**
   pour produire le premier signal imaginaire d'oscillation

   - pour les valeurs d'impédance se trouvant sur la courbe, on détermine respectivement un vecteur d'impédance partant du centre d'oscillation et
   - on calcule la valeur absolue du vecteur d'impédance et on produit le premier signal imaginaire d'oscillation si le rapport des valeurs absolues de deux vecteurs d'impédance se succédant directement est, dans une marge donnée à l'avance, autour de la valeur 1.

3. Procédé suivant la revendication 1 ou 2,
   **caractérisé en ce que**
   pour produire le deuxième signal imaginaire d'impédance

   - pour les valeurs d'impédance se trouvant sur la courbe, on détermine un vecteur d'impédance partant du centre d'oscillation ;
   - pour le vecteur d'impédance en cours et le vecteur d'impédance le précédant directement, on détermine une vitesse angulaire et
   - on produit le deuxième signal imaginaire d'oscillation si la différence des vitesses angulaires devient inférieure à une valeur de seuil de vitesse donnée à l'avance.

4. Procédé suivant la revendication 3,
   **caractérisé en ce que**

   - pour déterminer la vitesse angulaire, on considère l'angle entre le vecteur d'impédance considéré et le vecteur d'impédance le précédent directement.

5. Procédé suivant l'une des revendications précédentes,
   **caractérisé en ce que**

   - on produit un troisième signal imaginaire d'oscillation si l'accélération, à laquelle les valeurs d'impédance suivent la courbe, est sensiblement la même et
   - on produit le signal d'oscillation même s'il y a le premier et le troisième signal imaginaire d'oscillation.

6. Procédé suivant la revendication 5,
   **caractérisé en ce que**

   - on ne produit le troisième signal imaginaire d'oscillation que s'il y a simplement le premier signal imaginaire d'oscillation.

7. Procédé suivant la revendication 5 ou 6,
   **caractérisé en ce que**
   pour produire le troisième signal imaginaire d'oscillation

   - pour les valeurs d'impédance se trouvant sur la courbe, on détermine un vecteur d'impédance partant du centre d'oscillation ;
   - pour le vecteur d'impédance en cours et le vecteur d'impédance le précédant directement, on détermine une accélération angulaire et
   - on produit le troisième signal imaginaire d'oscillation si la différence des accélérations angulaires devient inférieure à une valeur de seuil d'accélération donnée à l'avance.

8. Procédé suivant l'une des revendications précédentes,
   **caractérisé en ce que**
   pour déterminer le centre d'oscillation

- pour la valeur d'impédance en cours et pour un certain nombre de valeurs d'impédance la précédant directement, on détermine des centres partiels ;
- on élimine les centres partiels ayant la partie imaginaire la plus grande et la plus petite et
- on détermine, à partir des centres partiels restants, la valeur moyenne d'oscillation sous la forme d'une moyenne arithmétique.

9. Procédé suivant la revendication 8, **caractérisé en ce que**

- on détermine, à partir des centres partiels restants, le centre d'oscillation, seulement si l'écart-type de la répartition des centres partiels est inférieur à une valeur de seuil de vraisemblance donnée à l'avance.

10. Procédé suivant la revendication 8 ou 9, **caractérisé en ce que**

- on effectue la détermination des centres partiels au moyen d'un procédé d'estimation par les moindres carrés.

11. Procédé suivant l'une des revendications précédentes, **caractérisé en ce que**

- on produit un quatrième signal imaginaire d'oscillation si la courbe est monotone et
- on ne produit le signal d'oscillation que s'il y a également le quatrième signal imaginaire d'oscillation.

12. Procédé suivant l'une des revendications précédentes, **caractérisé en ce que**

- on produit un cinquième signal imaginaire d'oscillation si la distance entre deux valeurs d'impédance se succédant directement dépasse une valeur de seuil de distance donnée à l'avance et
- on ne produit le signal d'oscillation que s'il y a également le cinquième signal imaginaire d'oscillation.

13. Procédé suivant l'une des revendications précédentes, **caractérisé en ce que**

- on produit un premier signal de saut si l'on détecte une variation brusque entre deux valeurs d'impédance se succédant directement, en ce qui concerne leur partie imaginaire ;
- on produit un deuxième signal de saut si l'on détecte une variation brusque entre deux valeurs d'impédance se succédant directement en ce qui concerne leur partie réelle ;
- on produit le signal d'oscillation s'il y a seulement l'un des deux signaux de saut et s'il y a en même temps

     - le premier et le deuxième signal imaginaire d'oscillation ou
     - le premier et le troisième signal imaginaire d'oscillation et

- on bloque le signal d'oscillation s'il y a les deux signaux de saut.

14. Procédé suivant l'une des revendications précédentes, **caractérisé en ce que**

- en utilisant les valeurs d'impédance, on effectue aussi un procédé de protection de distance et
- on bloque la production d'un signal de déclenchement par le procédé de protection de distance s'il y a le signal d'oscillation.

15. Procédé suivant la revendication 14, **caractérisé en ce que**

- lorsque l'on effectue le procédé de protection de distance, on contrôle les valeurs d'impédance sur le point de savoir si elles se trouvent dans un polygone de déclenchement donné à l'avance et
- on n'émet le signal d'oscillation que si au moins la valeur d'impédance en cours se trouve dans un polygone d'oscillation entourant le polygone de déclenchement.

16. Appareil (12) électrique de protection de mesure pour contrôler un réseau d'alimentation en énergie électrique, comprenant

- un dispositif (14) de détection et de prétraitement de valeurs de mesure pour détecter et traiter des valeurs de mesure caractérisant le courant et la tension en un point (11) de mesure du réseau d'alimentation en énergie ;
- un dispositif (15) de commande pour traiter les valeurs de mesure et
- un dispositif (18) de détection d'oscillation ; **caractérisé en ce que**
- le dispositif (18) de détection d'oscillation est conçu pour effectuer un procédé suivant l'une des revendications 1 à 14.

FIG 1

FIG 2

FIG 3

# FIG 4

FIG 5

# FIG 6

FIG 7

FIG 8

# FIG 9

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0724319 A2
- EP 0783197 A1
- DE 19746719 C1

**In der Beschreibung aufgeführte Nicht-Patentliteratur**

- *SIPROTEC Distanzschutz 7SA6, V4.3,* 2002